# FASCICULE DE BREVET EUROPEEN

(11) **EP 2 118 448 B1**
(45) Date de publication et mention de la délivrance du brevet: **18.08.2010**
(21) Numéro de dépôt: 08788003.5
(22) Date de dépôt: 14.03.2008
(51) Int. Cl.: F01D 11/08, F01D 9/04

(54) **ENSEMBLE D'ANNEAU DE TURBINE POUR TURBINE A GAZ**
TURBINENRINGANORDNUNG FÜR EINE GASTURBINE
TURBINE RING ASSEMBLY FOR GAS TURBINE

(30) Priorité: 15.03.2007 FR 0753841
(43) Date de publication de la demande: 18.11.2009
(73) Titulaire: Snecma Propulsion Solide, 33187 Le Haillan Cedex (FR)
(72) Inventeur: HABAROU, Georges, F-33310 Le Bouscat (FR); MATEO, Julien, F-33290 Le Pian Medoc (FR); BOUILLON, Eric, F-33185 Le Haillan (FR)
(74) Mandataire: Joly, Jean-Jacques
(86) Numéro de dépôt international: PCT/FR2008/050444
(87) Numéro de publication internationale: WO 2008/132363

(56) Documents cités:
- EP-A- 1 350 927
- WO-A-96/30317
- GB-A- 2 343 224
- US-A- 4 790 052
- US-A- 5 080 557
- US-A1- 2004 047 726
- US-A1- 2005 158 168
- US-B1- 6 699 607

## Description

### Arrière-plan de l'invention

L'invention concerne les anneaux de turbine pour turbines à gaz, qu'il s'agisse de turbines à gaz industrielles ou de turbines à gaz de moteurs aéronautiques.

Dans une turbine à gaz, un anneau de turbine définit une veine d'écoulement de flux gazeux à travers la turbine au niveau d'une roue mobile de celle-ci. Pour assurer le meilleur rendement possible, il est important d'éviter un passage direct des gaz entre les sommets des aubes de la roue de turbine et la surface interne de l'anneau. Aussi, de façon habituelle, un anneau de turbine est muni à sa face interne d'une couche de matériau abradable avec lequel les sommets d'aubes peuvent entrer en contact sans endommagement notable sous l'effet de variations dimensionnelles d'origine thermique ou résultant de la force centrifuge appliquée aux aubes.

Les anneaux de turbine sont habituellement réalisés en plusieurs secteurs adjacents en matériau métallique.

Il a été proposé par exemple dans le document US 6 758 653 de remplacer le matériau métallique des secteurs d'anneau de turbine par un matériau composite thermostructural, plus particulièrement un matériau composite à matrice céramique (ou CMC). Un tel matériau présente en effet des propriétés mécaniques le rendant apte à constituer des éléments de structure ainsi que la capacité à conserver ces propriétés à température élevée, tout en ayant une masse volumique bien inférieure à celle des matériaux métalliques couramment utilisés pour une telle application.

Le remplacement du matériau métallique de secteurs d'anneau de turbine par un matériau CMC est donc attractif. Toutefois, il est nécessaire de concevoir un montage assez complexe des secteurs d'anneau pour tenir compte de la différence entre les coefficients de dilatation d'un matériau CMC et du matériau d'un carter métallique dans lequel les secteurs d'anneau sont montés, tout en minimisant les fuites entre secteurs adjacents. Un tel montage de secteurs d'anneau en CMC dans un anneau métallique est décrit dans le document EP 1 350 927.

Le document GB 2 343 224 montre un anneau en CMC à section en forme de C dont les extrémités recourbées viennent en appui sur des surfaces radiales dirigées vers l'extérieur d'un bloc annulaire métallique et sont maintenues contre ces surfaces par des éléments élastiques. Il est donc nécessaire de réaliser un anneau en CMC de forme relativement complexe et d'utiliser un bloc métallique de support segmenté.

Quant au document US 2005/158 168, il montre un anneau en CMC ayant une section en U dont les extrémités sont reliées à des faces latérales d'un bloc annulaire métallique au moyen de pièces de liaison de conception particulière autorisant un déplacement relatif. Pour permettre le montage de l'anneau en CMC, celui-ci ou le bloc annulaire métallique de support doit être réalisé en plusieurs segments annulaires.

### Objet et résumé de l'invention

L'invention a pour but de proposer un montage simplifié pour un anneau de turbine en matériau CMC permettant aussi de minimiser les fuites de gaz entre l'extérieur de l'anneau et la veine de flux gazeux chaud à l'intérieur de l'anneau.

Ce but est atteint grâce à un ensemble d'anneau de turbine d'une turbine à gaz, comprenant :
- un anneau complet en une seule pièce en matériau composite à matrice céramique (CMC), l'anneau ayant des faces latérales opposées ;
- une structure métallique de support de l'anneau en CMC comportant des premier et deuxième supports annulaires métalliques ayant des faces latérales internes qui sont situées en regard des faces latérales opposées de l'anneau en CMC, le montage de l'anneau en CMC entre le premier et le deuxième support annulaire étant réalisé de manière à permettre une dilatation différentielle au moins en direction radiale entre l'anneau en CMC et les supports annulaires ;
- des moyens de centrage de l'anneau en CMC ; et
- au moins un élément de blocage de l'anneau en CMC en rotation autour de son axe.

Ainsi, avec un anneau en CMC complet en une seule pièce disposé entre deux supports annulaires qui peuvent aussi être chacun en une seule pièce, donc non segmentés, la structure de l'ensemble d'anneau de turbine est simplifiée et toute fuite entre secteurs d'anneau est évitée. En outre, l'utilisation d'un matériau CMC permet de diminuer les besoins en refroidissement, d'où un moindre besoin en flux d'air de refroidissement.

Selon un premier mode de réalisation, les moyens de centrage de l'anneau en CMC comprennent des languettes élastiquement déformables portées par la structure métallique et venant en appui sur l'anneau en CMC. Les languettes déformables peuvent être en appui dans des évidements formés à la surface de l'anneau en CMC, pour contribuer au blocage de l'anneau en CMC en rotation, et peuvent s'étendre en direction circonférentielle.

Avantageusement, l'anneau en CMC est maintenu en appui latéral contre une face d'une des parties annulaires métalliques par application d'une force. Le maintien en appui latéral peut être assuré au moyen de doigts élastiquement déformables portés par la structure métallique de support et en appui contre un relief formé à la surface de l'anneau en CMC.

Les languettes et doigts élastiquement déformables peuvent être portés par une couronne métallique entourant l'anneau en CMC et ayant des parties annulaires latérales engagées dans des rainures formées dans les faces latérales internes des supports annulaires.

Selon un deuxième mode de réalisation, le centrage de l'anneau en CMC est réalisé par des portées tronconiques formées sur les faces latérales de l'anneau en CMC et les faces latérales internes des supports annulaires métalliques entre lesquelles l'anneau en CMC est disposé.

Avantageusement, dans l'un et l'autre des modes de réalisation, un joint d'étanchéité peut être interposé entre l'une au moins des faces latérales de l'anneau en CMC et la face latérale interne en regard d'un support annulaire métallique.

Avantageusement encore, une couche de matériau abradable est prévue sur la surface interne de l'anneau en CMC.

Le matériau de l'anneau en CMC peut être un matériau composite à matrice céramique auto-cicatrisante. Il peut aussi être muni d'un revêtement formant barrière environnementale contre la corrosion.

L'anneau en CMC peut comprendre un renfort fibreux formé par enroulement d'une texture fibreuse en couches superposées liées entre elles, par exemple par aiguilletage, ou être formé par une texture fibreuse tissée fermée, par exemple par couture.

### Brève description des dessins

L'invention sera mieux comprise à la lecture de la description faite, ci-après, à titre indicatif mais non limitatif en référence aux dessins annexés sur lesquels :
- la figure 1 est une vue très schématique partielle en demi-coupe axiale montrant l'intégration d'un premier mode de réalisation d'un ensemble d'anneau de turbine selon l'invention dans son environnement dans une turbine à gaz ;
- la figure 2 est une vue en élévation latérale de la couronne métallique dans laquelle l'anneau en CMC est monté dans le mode de réalisation de la figure 1 ;
- la figure 3 est une vue en coupe selon le plan III-III de la figure 2 montrant aussi l'anneau en CMC;
- les figures 4 et 5 sont des vues en perspective montrant des détails de la figure 2 ;
- les figures 6 et 7 sont des vues partielles en coupe axiale à échelle agrandie selon les plans VI-VI et VII-VII de la figure 3 montrant également partiellement les supports de l'anneau et sa couronne métallique ;
- la figure 8 est une autre vue partielle en coupe axiale de l'ensemble d'anneau de turbine selon le premier mode de réalisation de l'invention ;
- la figure 9 est une vue très schématique en coupe montrant l'intégration d'un deuxième mode de réalisation d'un ensemble d'anneau de turbine selon l'invention dans son environnement dans une turbine à gaz ;
- la figure 10 est une vue partielle en coupe axiale de l'ensemble d'anneau de turbine de la figure 9 ;
- les figures 11 et 12 sont des vues respectivement en coupe axiale et en coupe selon le plan XII-XII de la figure 11 montrant un détail de l'ensemble d'anneau de turbine de la figure 9 ;
- la figure 13 est une vue partielle illustrant de façon très schématique un mode de fabrication d'un renfort fibreux pour un anneau en matériau CMC d'un ensemble d'anneau de turbine selon l'invention; et
- la figure 14 est une vue partielle illustrant de façon schématique une armure de tissage relative à un autre mode de fabrication d'un renfort fibreux pour un anneau en matériau CMC d'un ensemble d'anneau de turbine selon l'invention.

### Description détaillée de modes de réalisation de l'invention

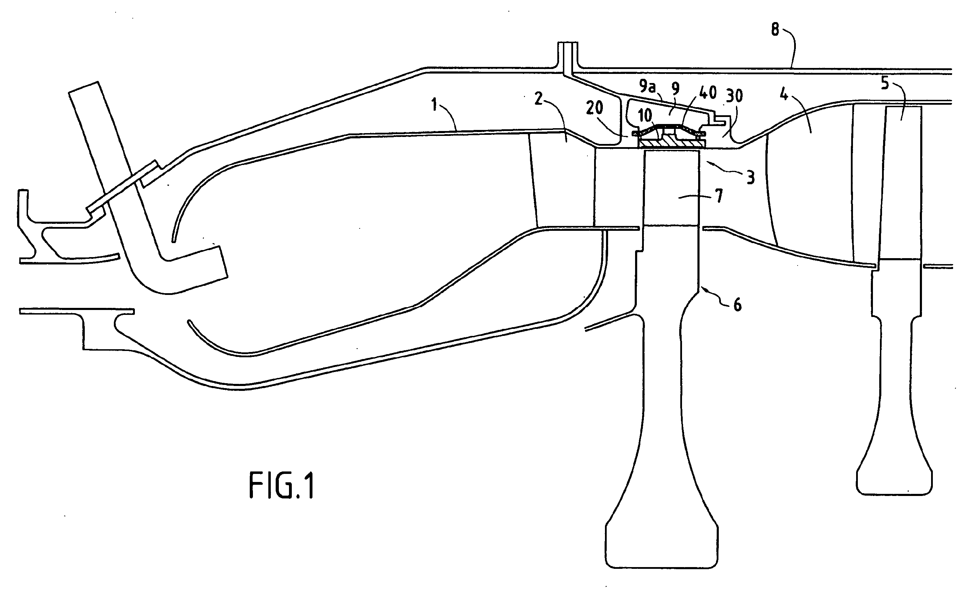

Un premier mode de réalisation d'un ensemble d'anneau de turbine conforme à l'invention sera décrit en référence aux figures 1 à 8.

Sur la figure 1 sont représentés de façon très schématique, de l'amont vers l'aval dans le sens d'écoulement de flux gazeux dans une turbine à gaz, une chambre de combustion 1, un distributeur de turbine 2 disposé en sortie de la chambre de combustion, une turbine haute-pression (HP) 3, un redresseur de flux 4 et un premier étage d'une turbine basse-pression (BP) 5.

La turbine HP 3 comprend une roue de turbine 6 mobile en rotation portant des aubes 7 et un ensemble d'anneau de turbine.

L'ensemble d'anneau de turbine comprend un anneau de turbine 10 complet, c'est-à-dire non interrompu et en une seule pièce, en matériau CMC. L'anneau en CMC 10 est supporté par une structure de support métallique comprenant un premier support annulaire, ou support annulaire amont 20, et un deuxième support annulaire, ou support annulaire aval 30, entre lesquels l'anneau 10 est disposé et maintenu, ainsi qu'une couronne métallique 40 entourant l'anneau.

Les supports métalliques 20 et 30 forment des anneaux complets, non segmentés, et sont reliés à un carter de turbine 8. Un espace annulaire 9 est formé à l'extérieur de l'anneau 10, entre les supports 20, 30, délimité par une paroi de fond 9a. De l'air de refroidissement est amené dans l'espace annulaire 9 de façon en soi bien connue.

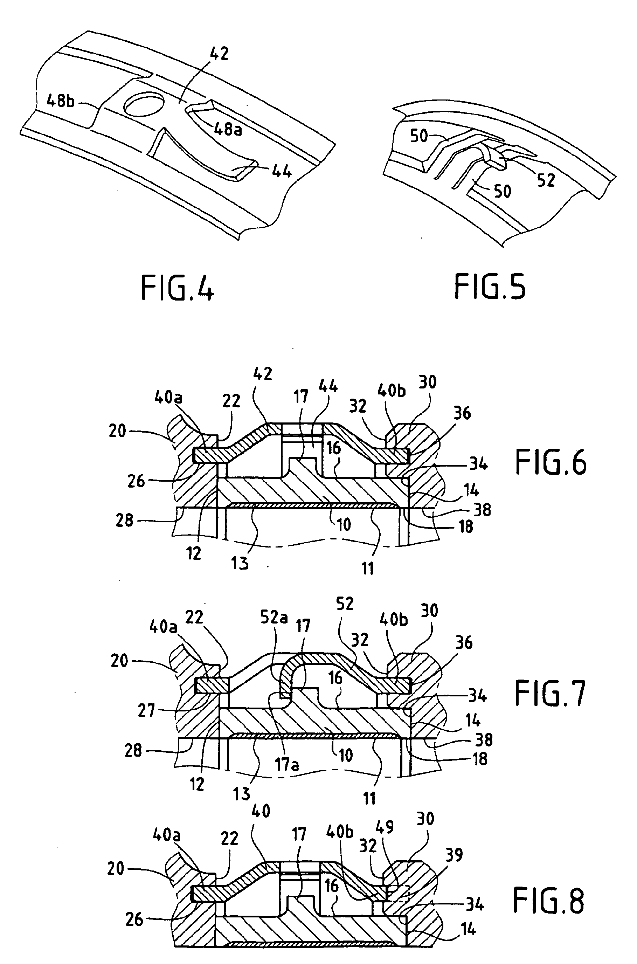

Comme le montrent notamment les figures 6 et 7, le support annulaire 20 présente une face latérale radiale interne 22 en regard d'une face latérale radiale 12 de l'anneau 10. La face latérale radiale opposée 14 de l'anneau 10 vient en appui contre une surface radiale en regard définie par le fond 34 d'un décrochement formé dans la face latérale radiale interne 32 du support annulaire 30, à partir de sa surface interne 38.

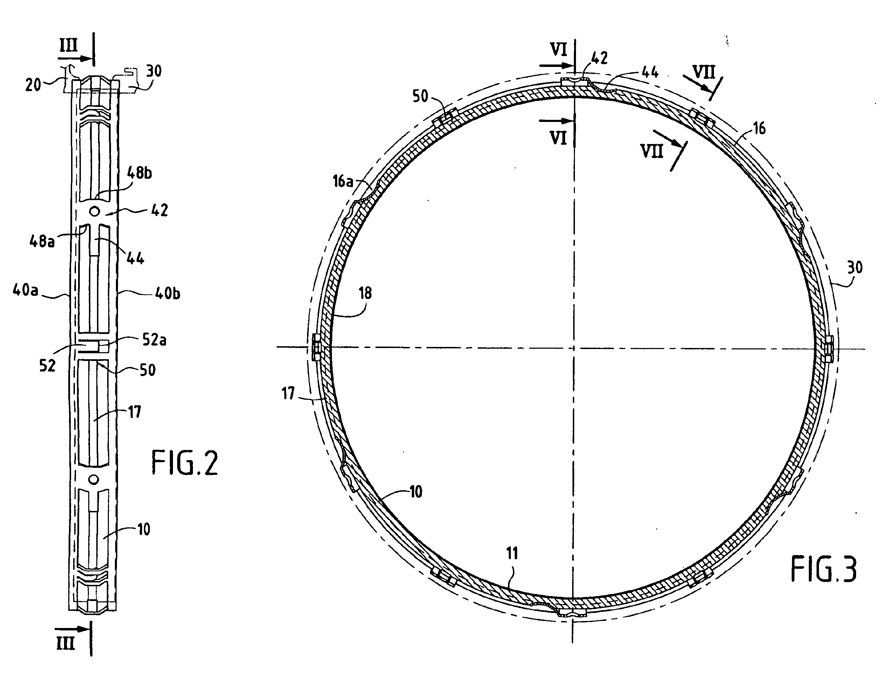

La couronne métallique 40 entourant l'anneau 10 (voir aussi figures 2 et 3) comprend deux parties annulaires latérales 40a, 40b reliées entre elles par des pattes 42, 50. Les parties annulaires latérales 40a, 40b s'engagent dans des rainures circonférentielles 26, 36 formées dans les faces internes 22, 32 en regard des supports annulaires 20, 30.

Les pattes 42 portent des languettes 44 élastiquement déformables (voir notamment figures 2, 4 et 6) qui sont appliquées avec précontrainte sur la surface périphérique externe 16 de l'anneau 10. Dans l'exemple illustré, les languettes 44 s'étendent en direction circonférentielle, présentent un profil courbe et s'appuient sur l'anneau 10 par leurs faces concaves dans des évidements 16a de formes correspondantes formés dans la surface 16. En variante, les languettes pourraient être recourbées à leur extrémité pour former un ergot engagé dans une rainure formée à la surface de l'anneau en CMC. Les languettes 44 font saillie à partir de la partie médiane d'un des côtés 48a, 48b des pattes 42, le côté 48a dans l'exemple illustré.

Du fait de leur capacité de déformation élastique, les languettes 44 peuvent absorber des différences de variations dimensionnelles en direction radiale entre les supports annulaires métalliques 20, 30 et l'anneau 10 en CMC. A température élevée, les supports annulaires 20, 30 ont tendance à se dilater de façon plus importante que l'anneau 10. Les languettes 44 étant appliquées sur la périphérie de l'anneau 10 avec précontrainte, elles permettent de maintenir l'anneau centré dans la position désirée, c'est-à-dire avec l'axe de l'anneau 10 en permanence confondu avec celui des supports 20, 30. De plus, étant en appui dans des évidements formés à la périphérie de l'anneau 10, les languettes 44 s'opposent à toute rotation de l'anneau 10 par rapport à la couronne 40.

Le nombre de pattes 42 est choisi au moins égal à 3. Dans l'exemple illustré, il est égal à 6. De préférence en outre, les pattes 42 sont réparties de façon régulière autour de l'anneau 10.

Des deuxièmes pattes 50 (voir notamment figures 2, 5 et 7) portent des languettes 52 élastiquement déformables ayant une extrémité recourbée 52a qui vient en appui sur une face latérale 17a d'une nervure circonférentielle 17 de la surface périphérique externe 16 de l'anneau 10 de manière à appliquer la face latérale 14 de l'anneau 10 contre le fond du décrochement 34 du support annulaire 30. Les languettes 52 sont par exemple découpées dans la partie médiane des pattes 50 et s'étendent en direction axiale. On notera que les logements 16a dans lesquels s'appuient les languettes 44 sont ici formés dans la nervure 17 qui est continue.

En maintenant en appui l'anneau 10 contre le support annulaire aval 30, dans le décrochement 34, les languettes 52 permettent de minimiser les fuites entre la veine d'écoulement du flux gazeux chaud à l'intérieur de l'anneau et l'extérieur de celui-ci. Ainsi, dans le cas envisagé d'un ensemble d'anneau de turbine avec refroidissement par amenée d'air du côté extérieur de l'anneau de turbine, on limite une fuite d'air de refroidissement vers la veine de flux gazeux chaud. On pourrait si désiré insérer un joint d'étanchéité annulaire entre l'anneau 10 et le support 30, le décrochement 34 pouvant alors ne pas être nécessaire.

Le nombre de pattes 50 est choisi de préférence au moins égal à 3. Dans l'exemple illustré, il est égal à 6. De préférence en outre, les pattes 50 sont réparties de façon régulière autour de l'anneau 10.

La couronne métallique 40 est immobilisée en rotation par rapport aux supports annulaires 20, 30. Comme le montre la figure 8, cela peut être réalisé au moyen d'au moins une dent 39 faisant saillie dans la rainure annulaire 36 du support 30 et engagée dans une encoche 49 formée dans la partie annulaire 40b. Une disposition similaire pourrait être prévue du côté du support 20.

A sa surface périphérique interne 18, l'anneau 10 est muni d'une couche 11 de matériau abradable. Dans l'exemple illustré (voir notamment les figures 6, 7, 8), la couche 11 est disposée dans un logement 13 ménagé dans la surface interne 18 sur la plus grande partie de la largeur de l'anneau 10 en direction axiale. De la sorte, la face exposée de la couche 11, les parties de surface interne 18 situées de chaque côté de la couche 11, ainsi que les faces internes 28, 38 des supports annulaires 20, 30 définissent une surface continue de veine de flux gazeux chaud ne présentant pas de brusques variations de diamètre. Il est toutefois envisageable de former la couche de matériau abradable sur la surface interne 18 sans ménager de logement dans celle-ci, la couche de matériau abradable faisant alors saillie dans la veine de flux gazeux chaud.

Les efforts exercés par des sommets d'aubes de roue mobile de turbine venant au contact de la couche de matériau abradable 11 sont relativement limités de sorte que les languettes 44 suffisent pour s'opposer à une rotation de l'anneau 10 par rapport à la couronne métallique 40, celle-ci étant immobilisée en rotation par rapport aux pièces de support annulaires 20, 30.

La couronne métallique 40 a pour fonction de relier l'anneau 10 aux supports annulaires 20, 30 en autorisant une dilatation différentielle en direction radiale tout en maintenant l'anneau 10 centré. La couronne métallique contribue aussi au blocage de l'anneau 10 en rotation et au maintien de l'anneau en appui sur le support aval 30.

La couronne métallique pourra être découpée dans un anneau métallique avec formation par exemple par estampage des pattes 42, 50 avec les languettes 44, 52.

Le montage de l'ensemble d'anneau de turbine est particulièrement simplifié en comparaison avec des anneaux formés de secteurs. L'anneau 10 en CMC est assemblé avec la couronne métallique 40 par déformation des languettes 44 et la couronne métallique 40 est insérée entre les supports annulaires 20, 30.

Il est possible de réaliser les fonctions de support et de centrage de l'anneau en CMC au moyen de pattes individuelles semblables aux pattes 42, 50 mais non solidaires de parties annulaires complètes telles que les parties annulaires 40a, 40b. Les pattes individuelles peuvent alors avoir leurs bords engagés dans des logements respectifs formés dans les faces 22, 32 des supports annulaires 20, 30.

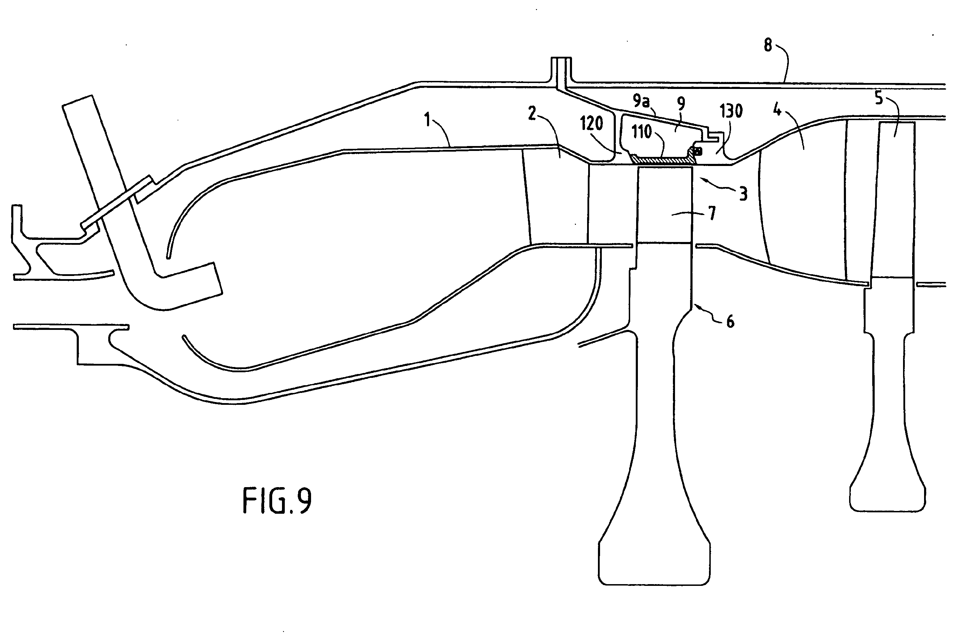

Un deuxième mode de réalisation d'un ensemble d'anneau de turbine conforme à l'invention sera maintenant décrit en référence aux figures 9 à 12.

La figure 9 est une vue schématique partielle en demi-coupe axiale d'une turbine à gaz qui se distingue de la figure 1 essentiellement par la forme de l'anneau de turbine 110 et son montage entre un premier support métallique annulaire, ou support métallique amont 120, et un deuxième support métallique annulaire, ou support métallique aval 130, dans l'ensemble d'anneau de turbine HP 3, les autres éléments de la turbine à gaz étant similaires à ceux de la figure 1 et portant les mêmes références.

L'anneau de turbine 110 est un anneau complet et en une seule pièce en CMC. Les supports métalliques annulaires peuvent également être sous forme d'anneaux complets, non segmentés.

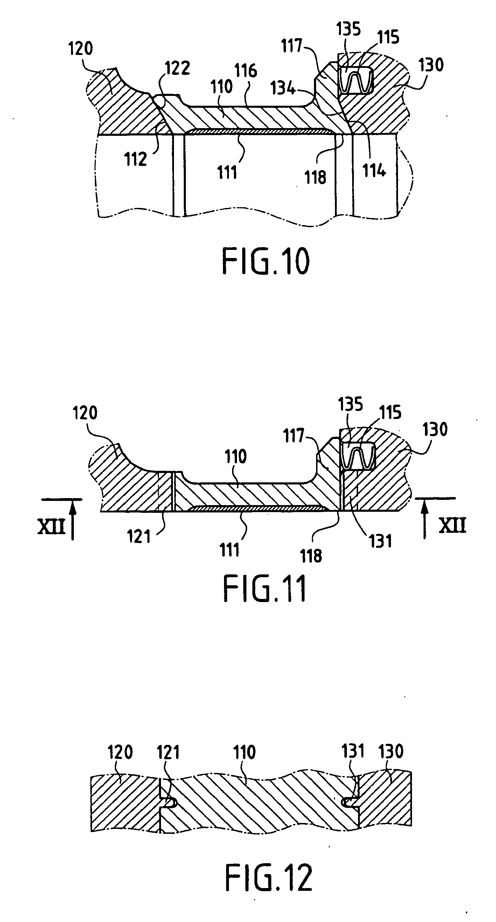

Comme le montre notamment la figure 10, les faces latérales internes des supports annulaires 120, 130 présentent des parties de surface tronconiques 122, 134. Une face latérale de l'anneau 110 présente une surface 112 de forme tronconique correspondant à celle de la partie de surface 122 tandis que l'autre face latérale de l'anneau 110 présente une partie de surface 114 de forme tronconique correspondant à celle de la partie de surface 134. Par le contact des parties de surfaces tronconiques 122, 134 avec les surfaces latérales 112, 114 de l'anneau 110, le centrage permanent de l'anneau 110 est assuré tout en permettant une variation dimensionnelle différentielle en direction radiale entre l'anneau 110 et les supports annulaires 120, 130 sous l'effet de la température.

Afin de limiter les fuites du côté aval entre la veine de flux gazeux chaud délimité par la surface périphérique interne 118 de l'anneau 110 et l'extérieur délimité par la surface périphérique externe 116, un joint d'étanchéité 115 peut être interposé entre l'anneau 110 et le support annulaire 130. A cet effet, l'anneau 110 présente un rebord annulaire 117 faisant saillie à sa surface périphérique externe 116 et présentant une face latérale qui se raccorde à la partie de surface tronconique 114. La face latérale du rebord 117 constitue une surface d'appui pour le joint d'étanchéité 115, par exemple un joint à profil en ω, logé dans une gorge 135 formée dans une partie de surface radiale de la face latérale interne du support 130.

Les parties de surface tronconique 122, 134 des faces internes des supports annulaires 120, 130 présentent des reliefs par exemple en forme de dents 121, 131 (figures 11, 12) qui pénètrent dans des logements correspondants formés dans les surfaces tronconiques 112, 114 des faces latérales de l'anneau 110. Un blocage de l'anneau en rotation par rapport à la structure métallique de support formée par les supports 120, 130 est ainsi assuré. Les dents 121, de même que les dents 131, peuvent être en nombre limité et de préférence réparties angulairement de façon régulière. On pourra n'avoir qu'une seule dent 121, 131 et prévoir une ou plusieurs dents sur seulement l'une des pièces annulaires de support 120, 130.

En variante, le blocage en rotation pourrait être réalisé par un ou plusieurs pions engagés en direction axiale à la fois dans l'anneau 110 et dans l'un et/ou l'autre des supports annulaires 120 et 130.

A sa surface périphérique interne, l'anneau 110 peut être muni d'une couche 111 de matériau abradable, comme dans le mode de réalisation précédent.

Le matériau CMC de l'anneau 10 ou 110 peut être de type connu en soi obtenu par densification d'une préforme fibreuse par une matrice céramique, la préforme fibreuse fournissant le renfort fibreux du matériau. Les fibres de la préforme fibreuse sont des fibres réfractaires telles que des fibres de carbone ou des fibres en céramique, par exemple en carbure de silicium (SiC). On notera que le terme « céramique » recouvre aussi les composés de type oxydes réfractaires.

Une première étape peut consister à réaliser une préforme fibreuse annulaire qui, après densification par la matrice céramique, permet d'obtenir une pièce annulaire dans laquelle l'anneau en matériau CMC peut être usiné, étant noté que l'usinage est de préférence réalisé à un stade de densification intermédiaire pour faire en sorte qu'après une étape finale ultérieure de densification, les fibres de la préforme fibreuse sont bien protégées par une couche de matrice.

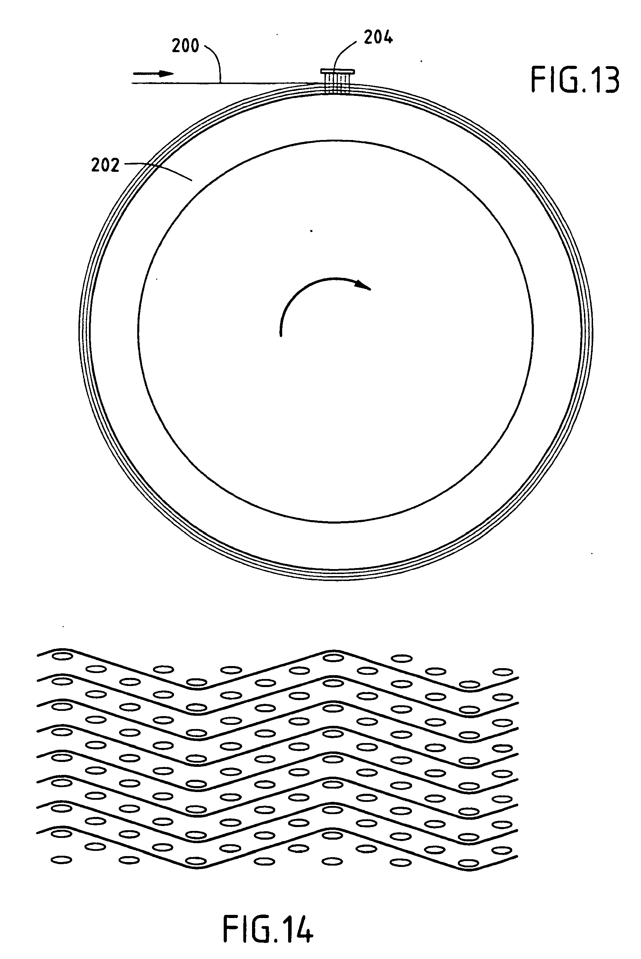

Un premier mode de réalisation d'une préforme fibreuse annulaire est illustré schématiquement par la figure 13. Une bande de texture fibreuse 200 est enroulée sur un mandrin 202 dont le diamètre extérieur est choisi en fonction de celui de la surface périphérique interne de l'anneau à réaliser. On pourra utiliser une texture fibreuse sous forme d'une bande de tissu, de tricot ou de nappe unidirectionnelle ou multidirectionnelle ou encore sous forme d'une tresse. La texture 200 est enroulée en spires ou couches superposées qui sont liées les unes aux autres, par exemple par couture, implantation de fils ou par aiguilletage. Dans le cas d'un aiguilletage, le mandrin pourra être muni d'un revêtement permettant la pénétration des aiguilles sans les endommager. L'aiguilletage pourra être réalisé après enroulement de la texture 202 ou au fur et à mesure de cet enroulement, au moyen d'une tête d'aiguilletage 204 qui s'étend sur toute la largeur de la bande 200. Des procédés de réalisation de préformes fibreuses aiguilletées sont décrits dans les documents US 4 790 052 et US 5 226 217.

Un deuxième mode de réalisation d'une préforme fibreuse annulaire consiste à réaliser une bande d'épaisseur voulue par tissage tridimensionnel et à relier les deux extrémités de la bande pour pouvoir former un anneau complet. La figure 14 illustre schématiquement une armure de type interlock utilisable pour le tissage tridimensionnel (les fils de trame étant en coupe). Les parties d'extrémité de la bande tissée pourront être réalisées avec une épaisseur décroissante en direction des extrémités pour pouvoir être superposées sans surépaisseur notable en vue de relier les deux parties d'extrémité. Une épaisseur décroissante peut être obtenue lors du tissage en diminuant le nombre de couches de fils de chaîne et de trame. La liaison des parties d'extrémité superposées de la bande tissée peut être réalisée par exemple par couture des parties d'extrémité ou implantation de fils. On notera que des armures de tissage tridimensionnel autres qu'une armure de type interlock peuvent être utilisées telles que des armures multicouches par exemple de type multi-toile ou multi-satin comme celles décrites dans le document WO 2006/136755.

Les profils des anneaux 10 et 110 des modes de réalisation décrits plus haut sont tels que la réalisation d'une préforme fibreuse annulaire de profil correspondant ne soulève pas de difficultés particulières.

La matrice céramique peut être une matrice céramique réfractaire, telle que SiC, ou, avantageusement, une matrice céramique "auto-cicatrisante". Une matrice céramique "auto-cicatrisante" est obtenue en réalisant au moins une phase constitutive de la matrice en un matériau capable, par passage à l'état visqueux dans un certain domaine de températures, de combler ou "cicatriser" des fissures s'étant formées dans la matrice notamment sous l'effet de cyclages thermiques. Des compositions ayant des propriétés "auto-cicatrisantes" sont notamment des compositions vitreuses, par exemple de type aluminosilicate, ou des compositions capables, sous l'effet d'une oxydation, de former des compositions vitreuses. Des phases de matrice en carbure de bore B₄C ou en un système ternaire Si-B-C sont des précurseurs de compositions vitreuses. La matrice peut être formée par infiltration chimique en phase gazeuse, ou CVI ("Chemical Vapor Infiltration"), et un revêtement d'interphase par exemple en carbone pyrolytique PyC ou nitrure de bore BN peut être préalablement formé sur les fibres de la préforme. La préforme fibreuse peut être maintenue dans la forme voulue au moyen d'un outillage pendant une première phase de densification jusqu'à consolidation de la préforme, c'est-à-dire une densification partielle suffisante pour que la préforme puisse conserver ensuite sa forme sans l'assistance d'un outillage. Des procédés de réalisation de matériau composite à matrice céramique auto-cicatrisante sont décrits notamment dans les documents US 5 965 266, US 6 291 058 et US 6 068 930.

Après densification et usinage, le matériau CMC peut être protégé contre la corrosion par une barrière de protection environnementale, de façon connue en soi. Une telle barrière peut par exemple comprendre une couche externe en zircone stabilisée à l'yttrium et une sous-couche de liaison en mullite. Il est connu aussi d'apporter la résistance contre la corrosion par une couche en un composé de type aluminosilicate de métal alcalino-terreux, tel que le composé BaO_{0,75}.SrO_{0,25}.Al₂O₃(SiO₂)₂ désigné couramment sous l'abréviation BSAS. Dans le cas d'un matériau CMC contenant du silicium, une couche de barrière chimique peut alors être interposée, par exemple en mullite ou en un mélange de mullite + BSAS tandis qu'une sous-couche de liaison ou d'accrochage en Si peut être prévue. Une couche de barrière thermique en zircone stabilisée à l'yttrium peut être formée sur la couche de BSAS. Des barrières environnementales convenant particulièrement pour des matériaux CMC à matrice contenant du silicium sont décrites notamment dans les documents US 6 866 897, EP 1 416 066, US 6 759 151, FR 06 51880 et FR 06 55578. Le dépôt des différentes couches de la barrière environnementale peut être effectué par dépôt physique en phase gazeuse, par exemple par projection plasma ou plasma thermique, ou par dépôt chimique en phase gazeuse, ou CVD ("Chemical Vapor Deposition") éventuellement assisté par plasma.

La couche de matériau abradable est par exemple en un oxyde réfractaire tel que zircone ou alumine. Elle peut être formée par un dépôt physique en phase gazeuse, par exemple par projection plasma ou plasma thermique. Le matériau abradable est de préférence poreux. De façon connue, la porosité peut être contrôlée en déposant le matériau de la couche abradable avec une poudre de matière éliminable par la chaleur, par exemple une poudre de polyéthylène.

La couche de matériau abradable peut être formée au-dessus de la barrière de protection environnementale.

L'ensemble d'anneau de turbine selon l'invention convient particulièrement pour une turbine HP d'une turbine à gaz. Il pourra toutefois être utilisé aussi pour une turbine BP ou une turbine intermédiaire dans le cas d'une turbine à gaz à plus de deux étages.

## Revendications

1. Ensemble d'anneau de turbine d'une turbine à gaz, comprenant :
- un anneau complet (10, 110) en une seule pièce en matériau composite à matrice céramique (CMC), l'anneau ayant des faces latérales opposées (12, 14 ; 112, 114) ;
- une structure métallique de support de l'anneau en CMC comportant des premier et deuxième supports annulaires métalliques (20, 30 ; 120, 130) ayant des faces latérales internes (22, 34 ; 122, 134) qui sont situées en regard des faces latérales opposées de l'anneau en CMC, le montage de l'anneau en CMC entre le premier et le deuxième support annulaire étant réalisé de manière à permettre une dilatation différentielle au moins en direction radiale entre l'anneau en CMC et les supports annulaires ;
- des moyens (40-42; 112-122, 114-134) de centrage de l'anneau en CMC ; et
- au moins un élément (44; 121, 131) de blocage de l'anneau en CMC en rotation autour de son axe.

2. Ensemble d'anneau de turbine selon la revendication 1, **caractérisé en ce que** les moyens de centrage de l'anneau en CMC comprennent des languettes élastiquement déformables (44) portées par la structure métallique et venant en appui sur l'anneau (10) en CMC.

3. Ensemble d'anneau de turbine selon la revendication 2, **caractérisé en ce que** les languettes élastiquement déformables (44) sont en appui dans des évidements (16a) formés à la surface externe (16) de l'anneau (10) en CMC, constituant également des éléments contribuant au blocage de l'anneau en CMC en rotation.

4. Ensemble d'anneau de turbine selon l'une quelconque des revendications 2 et 3, **caractérisé en ce que** les languettes élastiquement déformables (44) s'étendent en direction circonférentielle.

5. Ensemble d'anneau de turbine selon l'une quelconque des revendications 1 à 4, **caractérisé en ce que** l'anneau en CMC (10) est maintenu en appui latéral contre une face d'un des supports annulaires métalliques (30) par application d'une force.

6. Ensemble d'anneau de turbine selon la revendication 5, **caractérisé en ce que** le maintien en appui latéral de l'anneau en CMC est assuré au moyen de doigts élastiquement déformables (52) portés par la structure de support et en appui contre un relief (17) de la surface externe (16) de l'anneau (10) en CMC.

7. Ensemble d'anneau de turbine selon l'une quelconque des revendications 4 et 6, **caractérisé en ce que** les languettes (44) ou doigts (52) élastiquement déformables sont portés par une couronne métallique (40) entourant l'anneau en CMC et ayant des parties annulaires latérales engagées dans des rainures (26, 36) formées dans les faces latérales internes des supports annulaires (20, 30).

8. Ensemble d'anneau de turbine selon la revendication 1, **caractérisé en ce que** le centrage de l'anneau (110) en CMC est réalisé par des portées tronconiques (112, 114, 122, 134) formées sur les faces latérales de l'anneau en CMC et les faces latérales internes des supports annulaires (120, 130) entre lesquels l'anneau en CMC est disposé.

9. Ensemble d'anneau de turbine selon l'une quelconque des revendications 1 à 8, **caractérisé en ce qu'**un joint d'étanchéité (115) est interposé entre l'une au moins des faces latérales de l'anneau (110) en CMC et la face latérale interne en regard d'un support annulaire métallique (130).

10. Ensemble d'anneau de turbine selon l'une quelconque des revendications 1 à 9, **caractérisé en ce qu'**il comprend une couche de matériau abradable (11, 111) sur la surface interne (18, 118) de l'anneau (10, 110) en CMC.

11. Ensemble d'anneau de turbine selon l'une quelconque des revendications 1 à 10, **caractérisé en ce que** le matériau de l'anneau (10 ; 110) en CMC est un matériau composite à matrice céramique auto-cicatrisante.

12. Ensemble d'anneau de turbine selon l'une quelconque des revendications 1 à 11, **caractérisé en ce que** le matériau de l'anneau (10 ; 110) en CMC est muni d'un revêtement formant barrière environnementale protégeant contre la corrosion.

13. Ensemble d'anneau de turbine selon l'une quelconque des revendications 1 à 12, **caractérisé en ce que** l'anneau (10 ; 110) en CMC comprend un renfort fibreux formé par enroulement d'une texture fibreuse en couches superposées liées entre elles.

14. Ensemble d'anneau de turbine selon l'une quelconque des revendications 1 à 12, **caractérisé en ce que** l'anneau (10 ; 110) en CMC comprend un renfort fibreux formé par une texture fibreuse tissée annulaire fermée.

15. Turbine à gaz comprenant un ensemble d'anneau de turbine selon l'une quelconque des revendications 1 à 14.

## Claims

1. A turbine ring assembly for a gas turbine, the assembly comprising:
a complete ring (10, 110) comprising a single piece of ceramic matrix composite material (CMC), the ring having opposite lateral faces (12, 14; 112, 114);
a metal structure for supporting the CMC ring, the structure comprising first and second metal annular supports (20, 30; 120, 130) having inner lateral faces (22, 34; 122, 134) that are situated facing opposite lateral faces of the CMC ring, the CMC ring being mounted between the first and second annular supports in such a manner as to allow differential expansion at least in a radial direction between the CMC ring and the annular supports;
· means (40-42; 112-122; 114-134) for centering the CMC ring; and
· at least one element (44; 121, 131) for preventing the CMC ring from turning about its axis.

2. A turbine ring assembly according to claim 1, **characterized in that** the means for centering the CMC ring comprise elastically-deformable tongues (44) carried by the metal structure and pressing against the CMC ring (10).

3. A turbine ring assembly according to claim 2, **characterized in that** the elastically-deformable tongues (44) press in recesses (16a) formed in the outer surface (16) of the CMC ring (10), also constituting elements that contribute to preventing turning of the CMC ring.

4. A turbine ring assembly according to claim 2 or claim 3, **characterized in that** the elastically-deformable tongues (44) extend in a circumferential direction.

5. A turbine ring assembly according to any one of claims 1 to 4, **characterized in that** the CMC ring (10) is kept pressing laterally against a face of one of the metal annular supports (30) by applying a force.

6. A turbine ring assembly according to claim 5, **characterized in that** the CMC ring is caused to press laterally by means of elastically-deformable fingers (52) carried by the support structure and pressing against a portion in relief (17) of the outer surface (16) of the CMC ring (10).

7. A turbine ring assembly according to claim 4 or claim 6, **characterized in that** the elastically-deformable tongues (44) or fingers (52) are carried by a metal hoop (40) surrounding the CMC ring and having lateral annular portions engaged in grooves (26, 36) formed in the inner lateral faces of the annular supports (20, 30).

8. A turbine ring assembly according to claim 1, **characterized in that** the CMC ring (110) is centered by frustoconical bearing surfaces (112, 114, 122, 134) formed on the lateral faces of the CMC ring and on the inner lateral faces of the annular supports (120, 130) between which the CMC ring is placed.

9. A turbine ring assembly according to any one of claims 1 to 8, **characterized in that** a sealing gasket (115) is interposed between at least one of the lateral faces of the CMC ring (110) and the facing inner lateral face of a metal annular support (130).

10. A turbine ring assembly according to any one of claims 1 to 9, **characterized in that** it includes a layer of abradable material (11, 111) on the inside surface (18, 118) of the CMC ring (10, 110).

11. A turbine ring assembly according to any one of claims 1 to 10, **characterized in that** the material of the CMC ring (10; 110) is a composite material having a self-healing ceramic matrix.

12. A turbine ring assembly according to any one of claims 1 to 11, **characterized in that** the material of the CMC ring (10; 110) is provided with a coating forming an environmental barrier protecting it against corrosion.

13. A turbine ring assembly according to any one of claims 1 to 12, **characterized in that** the CMC ring (10; 110) comprises fiber reinforcement formed by winding superposed layers of fiber texture that are bonded to one another.

14. A turbine ring assembly according to any one of claims 1 to 12, **characterized in that** the CMC ring (10; 110) includes fiber reinforcement formed by a closed annular woven fiber texture.

15. A gas turbine including a turbine ring assembly according to any one of claims 1 to 14.

## Patentansprüche

1. Turbinenringanordnung für eine Gasturbine, umfassend:
- einen vollständigen Ring (10, 110) aus einem Stück aus Verbundstoff mit Keramikmatrix (CMC), wobei der Ring gegenüber liegende Seitenflächen (12, 14; 112, 114) besitzt,
- eine metallische Stützstruktur für den Ring aus CMC, umfassend erste und zweite metallische ringförmige Stützen (20, 30; 120, 130), die innere Seitenflächen (22, 34; 122, 134) aufweisen, die sich gegenüber den gegenüber liegenden Seitenflächen des Ringes aus CMC befinden, wobei die Montage des Ringes aus CMC zwischen der ersten und der zweiten ringförmigen Stütze derart erfolgt, daß eine Differentialdehnung zumindest in Radialrichtung zwischen dem Ring aus CMC und den ringförmigen Stützen möglich ist,
- Mittel (40-42; 112-122, 114-134) zum Zentrieren des Ringes aus CMC und
- mindestens ein Element (44; 121, 131) zur Drehfeststellung des Ringes aus CMC um seine Achse.

2. Turbinenringanordnung nach Anspruch 1, **dadurch gekennzeichnet, daß** die Mittel zum Zentrieren des Ringes aus CMC elastisch verformbare Zungen (44) umfassen, die von der metallischen Struktur getragen werden und auf dem Ring (10) aus CMC zur Anlage gelangen.

3. Turbinenringanordnung nach Anspruch 2, **dadurch gekennzeichnet, daß** die elastisch verformbaren Zungen (44) in Aussparungen (16a) liegen, die an der Außenfläche (16) des Ringes (10) aus CMC ausgebildet sind, wobei sie auch Elemente darstellen, die zur Drehfeststellung des Ringes aus CMC beitragen.

4. Turbinenringanordnung nach einem der Ansprüche 2 und 3, **dadurch gekennzeichnet, daß** sich die elastisch verformbaren Zungen (44) in Umfangsrichtung erstrecken.

5. Turbinenringanordnung nach einem der Ansprüche 1 bis 4, **dadurch gekennzeichnet, daß** der Ring aus CMC (10) seitlich an einer Fläche einer der metallischen ringförmigen Stützen (30) durch Kraftaufwendung anliegend gehalten werden.

6. Turbinenringanordnung nach Anspruch 5, **dadurch gekennzeichnet, daß** der Halt des Ringes aus CMC in seitlicher Anlage mit Hilfe von elastisch verformbaren Fingern (52) sichergestellt wird, die von der Stützstruktur getragen werden und an einem Relief (17) der Außenfläche (16) des Ringes (10) aus CMC anliegen.

7. Turbinenringanordnung nach einem der Ansprüche 4 und 6, **dadurch gekennzeichnet, daß** die elastisch verformbaren Zungen (44) oder Finger (52) von einem metallischen Kranz (40) getragen werden, der den Ring aus CMC umgibt und seitliche ringförmige Teile aufweist, die in Nuten (36, 36) im Eingriff stehen, die in den inneren Seitenflächen der ringförmigen Stützen (20, 30) ausgebildet sind.

8. Turbinenringanordnung nach Anspruch 1, **dadurch gekennzeichnet, daß** das Zentrieren des Ringes (110) aus CMC durch kegelstumpfartige Abschnitte (112, 114, 122, 134) erfolgt, die auf den Seitenflächen des Ringes aus CMC und den inneren Seitenflächen der ringförmigen Stützen (120, 130), zwischen denen der Ring aus CMC angeordnet ist, ausgebildet sind.

9. Turbinenringanordnung nach einem der Ansprüche 1 bis 8, **dadurch gekennzeichnet, daß** eine Dichtung (115) zwischen mindestens einer der Seitenflächen des Ringes (110) aus CMC und der inneren Seitenfläche gegenüber einer metallischen ringförmigen Stütze (130) angeordnet ist.

10. Turbinenringanordnung nach einem der Ansprüche 1 bis 9, **dadurch gekennzeichnet, daß** sie eine Schicht aus abschleifbarem Material (11, 111) auf der Innenseite (18, 118) des Ringes (10, 110) aus CMC umfaßt.

11. Turbinenringanordnung nach einem der Ansprüche 1 bis 10, **dadurch gekennzeichnet, daß** das Material des Ringes (10; 110) aus CMC ein Verbundstoff mit Keramikmatrix mit selbstheildener Wirkung ist.

12. Turbinenringanordnung nach einem der Ansprüche 1 bis 11, **dadurch gekennzeichnet, daß** das Material des Ringes (10; 110) aus CMC mit einem Überzug versehen ist, der eine Umweltschranke bildet, die vor Korrosion schützt.

13. Turbinenringanordnung nach einem der Ansprüche 1 bis 12, **dadurch gekennzeichnet, daß** der Ring (10; 110) aus CMC eine Faserverstärkung umfaßt, die durch Umwickeln einer Fasertextur in miteinander verbundenen übereinander liegenden Schichten gebildet wird.

14. Turbinenringanordnung nach einem der Ansprüche 1 bis 12, **dadurch gekennzeichnet, daß** der Ring (10; 110) aus CMC eine Faserverstärkung umfaßt, die von einer geschlossenen ringförmigen gewebten Fasertextur gebildet ist.

15. Gasturbine, umfassend eine Turbinenringanordnung nach einem der Ansprüche 1 bis 14.
